# EUROPEAN PATENT APPLICATION

(11) **EP 3 598 449 A1**
(43) Date of publication of application: **22.01.2020**
(21) Application number: 19186696.1
(22) Date of filing: 17.07.2019
(51) Int. Cl.: G11B 7/005, G11B 19/02, H04R 3/00

(54) **ELECTRONIC DEVICE AND CONTROL METHOD OF ELECTRONIC DEVICE**

(30) Priority: 18.07.2018 JP 2018134651
(71) Applicant: Onkyo Corporation, Osaka 572-0028 (JP)
(72) Inventor: INAGAKI, Makoto, Osaka 572-0028 (JP); MATSUNAGA, Yasunori, Osaka 572-0028 (JP)
(74) Representative: Horn Kleimann Waitzhofer Patentanwälte PartG mbB

(57) **Abstract**

Solution: The digital disc player 1 includes an audio circuit 3 which outputs an audio to an analog audio output, a digital circuit 2 which outputs an audio to a digital audio output and a microcomputer 21. When the microcomputer 21 does not use the audio circuit 3, the microcomputer 21 sets a power of the audio circuit 3 to OFF by setting a relay 5 which is connected between an AC power supply and an audio transformer 4 to OFF.

## Description

### [TECHNICAL FIELD]

The present invention relates to an electronic device which has an analog audio output and a digital audio output and a control method of an electronic device.

### [BACKGROUND ART]

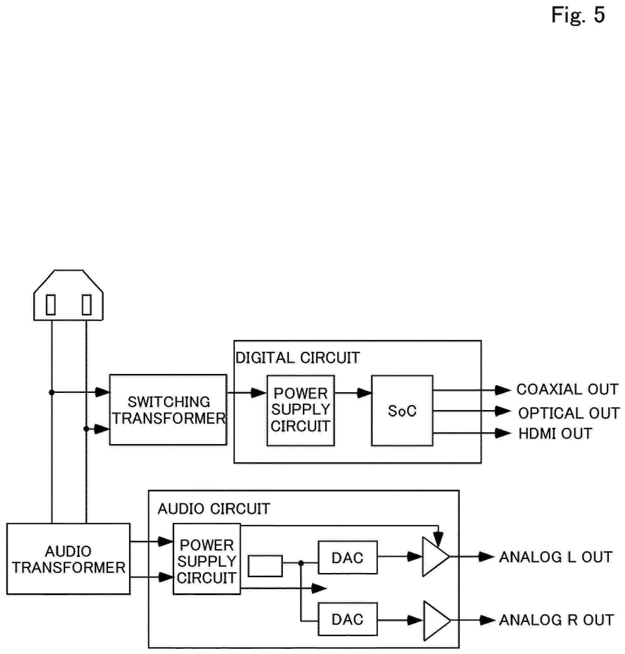

In an electronic device such as an audio visual product or the like, there is a device which has an analog audio output and a digital audio output (for example, see patent literature 1.). As the analog audio output, there are an RCA output, a balanced output and so on. As the digital audio output, there are a COAXIAL output, an optical output, an HDMI (registered trademark) (High-Definition Multimedia Interface) output and so on. As the product, these outputs are mounted and a case where a user only uses one of them is thought, actually. Fig. 5 is a block diagram illustrating a configuration of a conventional digital disc player.

Specially, for example, in case of a visual product such as a Blu-ray (registered trademark) player or the like, there is a case where the digital audio output is only connected to an AV receiver and the analog audio output is not used. In this case, the user would like to watch and listen to only the digital audio output in high quality.

### [PRIOR ART DOCUMENT]

### [PATENT LITERATURE]

[PATENT LITERATURE 1] JP 2008-299938 A

### [SUMMARY OF THE INVENTION]

### [PROBLEM TO BE RESOLVED BY THE INVENTION]

Herein, in an audio circuit which outputs an audio to the analog audio output, a D/A converter (DAC) which converts a digital audio to an analog audio and a clock of the DAC for operation are included. When the DAC operates, the clock of the DAC for operation also operates and it adversely affects sound quality of the audio which is output from the digital audio output.

An objective of the present invention is to improve sound quality of the audio which is output from the digital audio output.

### [MEANS FOR SOLVING THE PROBLEM]

An electronic device of a first invention comprising: a first circuit which outputs an audio to an analog audio output; a second circuit which outputs an audio to a digital audio output; and a controller, wherein the controller sets a power of the first circuit to OFF when the controller does not use the first circuit.

In the present invention, when a controller does not use a first circuit, the controller set a power of the first circuit to OFF. Therefore, current does not flow to the first circuit and noise which affects sound quality does not occur because the first circuit does not operate. Thus, sound quality of an audio which is output from a digital audio output can be improved because adverse effect to sound quality of the audio which is output from the digital audio output is suppressed. Namely, high sound quality audio is output from the digital audio output.

The electronic device of a second invention is the electronic device of the first invention, further comprising: a transformer which changes power supply voltage from a AC power supply and supplies changed power supply voltage to the first circuit; and a switch which is connected between the AC power supply and the transformer, wherein the controller sets the switch to OFF when the controller sets the power of the first circuit to OFF.

The electronic device of a third invention is the electronic device of the first or the second invention, further comprising: an operation section which is for receiving not using the first circuit, wherein the controller sets the power of the first circuit to OFF when the controller receives not using the first circuit by the operation section.

The electronic device of a fourth invention is the electronic device of any one of the first to the third inventions, wherein the first circuit includes a D/A converter which has a clock for operation and D/A-converts a digital audio to an analog audio, an amplifier which amplifies the analog audio which is D/A converted by the D/A converter, and a power supply circuit which supplies power supply voltage to the D/A converter and the amplifier, and power supply voltage from the transformer is supplied to the power supply circuit.

The electronic device of a fifth invention is the electronic device of any one of the first to the fourth inventions, wherein the controller does not output the audio from the second circuit when the controller does not use the second circuit.

A control method of an electronic device of a sixth invention comprising: a first circuit which outputs an audio to an analog audio output; and a second circuit which outputs an audio to a digital audio output, wherein a power of the first circuit is set to OFF when the first circuit is not used.

### [EFFECT OF THE INVENTION]

According to the present invention, sound quality of an audio which is output from a digital audio output can be improved.

### [BRIEF DESCRIPTION OF THE DRAWINGS]

Fig. 1 is a block diagram illustrating a configuration of a digital disc player according to an embodiment of the present invention.
Fig. 2 is a block diagram illustrating a configuration of the digital disc player according to the embodiment of the present invention.
Fig. 3 is a block diagram illustrating a configuration of the digital disc player according to the embodiment of the present invention.
Fig. 4 is a block diagram illustrating a configuration of the digital disc player according to the embodiment of the present invention.
Fig. 5 is a block diagram illustrating a configuration of a conventional digital disc player.

### [DESCRIPTION OF THE EMBODIMENTS]

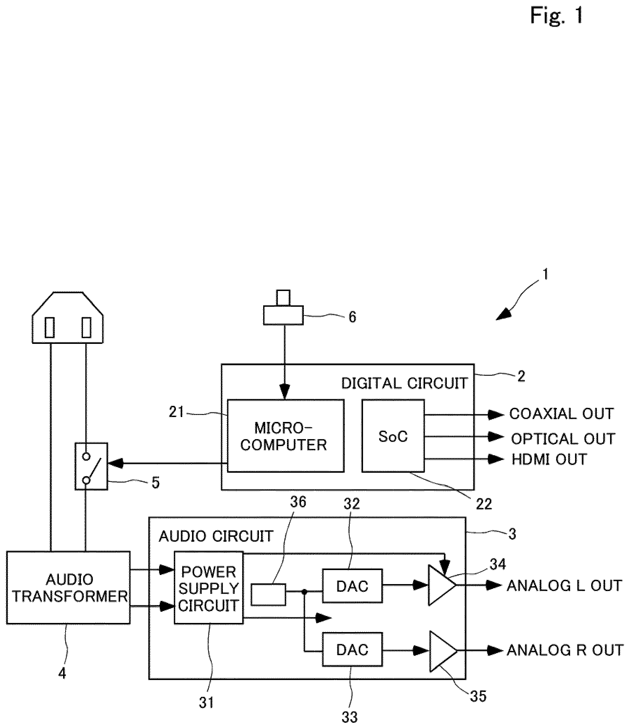

An embodiment of the present invention is described below. Fig. 1 is a block diagram illustrating a configuration of a digital disk player according to the present embodiment. For example, the digital disc player 1 (electronic device) corresponds to reproduction of Blu-ray (registered trademark) disc and outputs a visual, an audio and so on which are read from a digital disc to an AV receiver or the like.

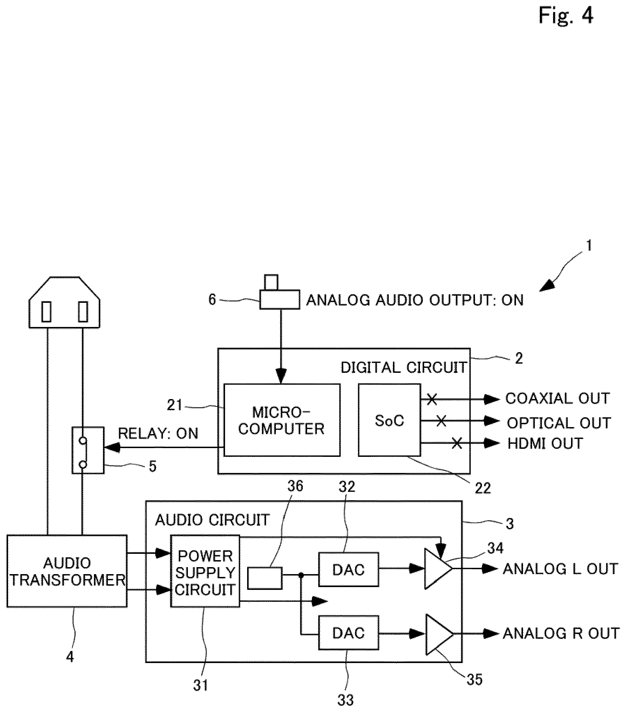

As illustrated in Fig. 1, the digital disc player 1 includes a digital circuit 2, an audio circuit 3, an audio transformer 4, a relay 5, an operation section 6 and so on. The digital circuit 2 (second circuit) outputs an audio to a COAXIAL OUT, an OPTICAL OUT, or an HDMI (registered trademark) OUT (digital audio output). The digital circuit 2 includes a microcomputer 21 and an SoC 22. As in Fig. 4, the digital disc player 1 further includes a switching transformer, the digital circuit 2 further has a power supply circuit, and these are omitted in Fig. 1. The switching transformer changes voltage of power supply from an AC power supply and supplies changed voltage to the power supply circuit of the digital circuit 2. The power supply circuit supplies power supply voltage from the switching transformer to the microcomputer 21 and the SoC 22.

The microcontroller 21 controls each section composing the digital disc player 1. The SoC (System on Chip) 22 outputs a digital audio to the COAXIAL OUT, the OPTICAL OUT, or the HDMI (registered trademark) OUT. The audio transformer 4 changes power supply voltage from the AC power supply and supplies changed power supply voltage to a power supply circuit 31 of the audio circuit 3. The relay 5 (switch) is connected between the AC power supply and the audio transformer 4. In the relay 5, ON / OFF is controlled by the microcomputer 21.

The audio circuit 3 (first circuit) outputs an audio to an analog L OUT and an analog R OUT (analog audio output). The audio circuit 3 has the power supply circuit 31, DACs 32 and 33, and operational amplifiers 34 and 35. Power supply voltage from the audio transformer 4 is supplied to the power supply circuit 31. The power supply circuit 31 supplies power supply voltage from the audio transformer 4 to the DACs 32 and 33 and the operational amplifiers 34 and 35. The DACs 32 and 33 (D/A converter) have a clock for operation 36. The DAC 32 D/A-converts an L channel digital audio to an analog audio. The L channel analog audio which is D/A-converted by the DAC 32 is output to the operational amplifier 34. The DAC 33 D/A-converts an R channel digital audio to an analog audio. The R channel analog audio which is D/A-converted by the DAC 33 is output to the operational amplifier 35.

The operational amplifier 34 (amplifier) amplifies the L channel analog audio which is D/A-converted by the DAC 32. The L channel analog audio which is amplified by the operational amplifier 34 is output to the analog L OUT. The operational amplifier 35 (amplifier) amplifies the R channel analog audio which is D/A-converted by the DAC 33. The R channel analog audio which is amplified by the operational amplifier 35 is output to the analog R OUT.

The operation section 6 is a switch for receiving not using the audio circuit 3. In other words, the operation section 6 is a switch for receiving ON / OFF of the analog audio output (the audio circuit 3). A user can switch ON / OFF of the analog audio output by the operation section 6. The operation section 6 may be a tact switch or a physical switch. The microcomputer 21 receives a signal from the operation section 6 and outputs a signal to set the relay 5 to ON / OFF to the relay 5. When the microcomputer 21 receives a signal to set the analog audio output to ON from the operation section 6, the microcomputer 21 sets the relay 5 to ON. When the microcomputer 21 receives a signal to set the analog audio output to OFF from the operation section 6, the microcomputer 21 set the relay 5 to OFF. In other words, when the microcomputer 21 receives that not to use the audio circuit 3 by the operation section 6, the microcomputer 21 sets the relay 5 to OFF. In other case, the microcomputer 21 sets the relay 5 to ON.

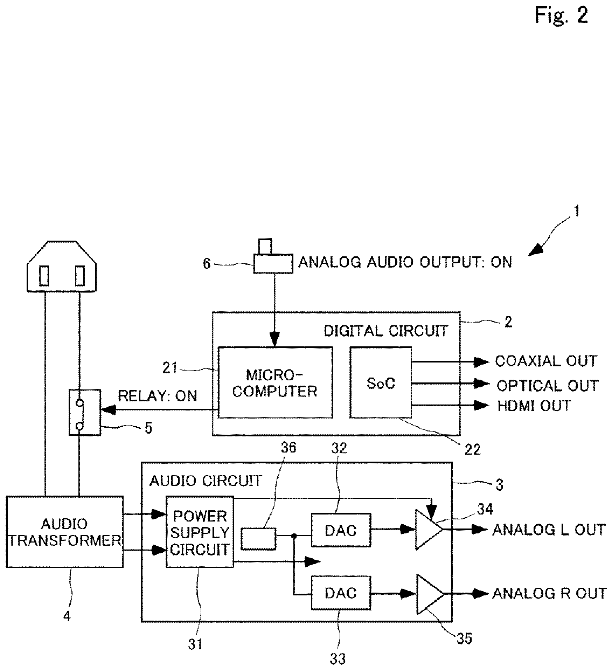

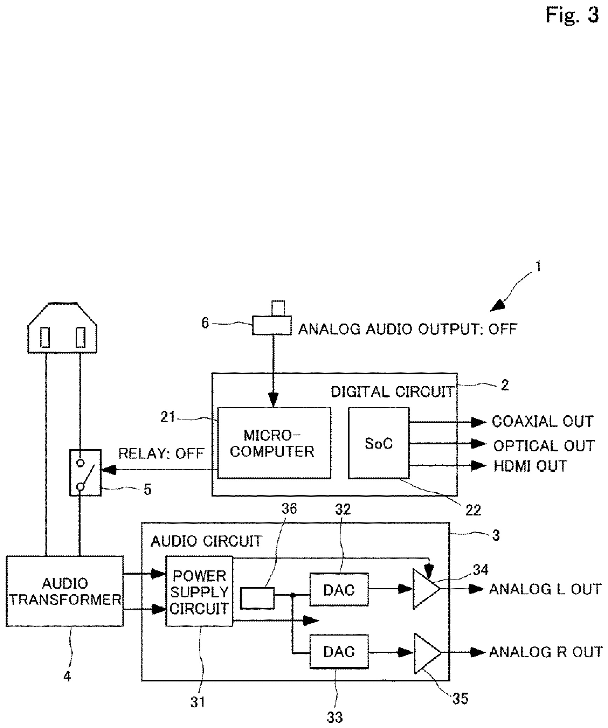

As described above, when the microcomputer 21 receives the signal of the analog audio output ON, as illustrated in Fig. 2, the microcomputer 21 sets the relay 5 of the audio transformer 4 to ON. Thus, power of the audio circuit 3 is ON and an analog audio is output. Further, when the microcomputer 21 receives the signal of the analog audio output OFF, as illustrated in Fig. 3, the microcomputer 21 sets the relay 5 of the audio transformer 4 to OFF. Thus, power of the audio circuit 3 is OFF, the audio circuit 3 does not operate, and the analog audio is also not output.

Further, as illustrated in Fig. 4, when the microcomputer 21 does not use the digital circuit 2, the microcomputer 21 stops a signal from the SoC 22 to each output (COAXIAL OUT, OPTICAL OUT, and HDMI (registered trademark) OUT). Namely, the microcomputer 21 does not output the audio from the SoC 22 (the digital circuit 2). Thus, sound quality of the audio which is output from the analog circuit 3 is improved.

As described above, in the present embodiment, when the microcomputer 21 does not use the audio circuit 3, the microcomputer 21 sets power of the audio circuit 3 to OFF. Therefore, current does not flow to the audio circuit 3 and noise which affects sound quality does not occur because the audio circuit 3 does not operate. Thus, sound quality of the audio which is output from the digital audio output can be improved because adverse effect to sound quality of the audio which is output from the digital audio output by the audio circuit 3 is suppressed. Namely, high sound quality audio is output from the digital audio output.

The embodiment of the present invention is described above, but the mode to which the present invention is applicable is not limited to the above embodiment and can be suitably varied without departing from the scope of the present invention.

### [INDUSTRIAL APPICABILITY]

The present invention can be suitably employed in an electronic device which has an analog audio output and a digital audio output and a control method of an electronic device.

### [DESCRIPTION OF REFFERENCE SIGNS]

- 1: digital disc player (electronic device)
- 2: digital circuit (second circuit)
- 21: microcomputer (controller)
- 3: audio circuit (first circuit)
- 31: power supply circuit
- 32 and 33: DAC (D/A converter)
- 34 and 35: operational amplifier (amplifier)
- 36: clock for operation
- 4: audio transformer
- 5: relay (switch)
- 6: operation section

## Claims

1. An electronic device comprising:
a first circuit which outputs an audio to an analog audio output;
a second circuit which outputs an audio to a digital audio output; and
a controller,
wherein the controller sets a power of the first circuit to OFF when the controller does not use the first circuit.

2. The electronic device according to claim 1 further comprising:
a transformer which changes power supply voltage from a AC power supply and supplies changed power supply voltage to the first circuit; and
a switch which is connected between the AC power supply and the transformer,
wherein the controller sets the switch to OFF when the controller sets the power of the first circuit to OFF.

3. The electronic device according to claim 1 or 2 further comprising:
an operation section which is for receiving not using the first circuit,
wherein the controller sets the power of the first circuit to OFF when the controller receives not using the first circuit by the operation section.

4. The electronic device according to any one of claims 1 to 3,
wherein the first circuit includes
a D/A converter which has a clock for operation and D/A-converts a digital audio to an analog audio,
an amplifier which amplifies the analog audio which is D/A converted by the D/A converter, and
a power supply circuit which supplies power supply voltage to the D/A converter and the amplifier,
and power supply voltage from the transformer is supplied to the power supply circuit.

5. The electronic device according to any one of claims 1 to 4,
wherein the controller does not output the audio from the second circuit when the controller does not use the second circuit.

6. A control method of an electronic device comprising:
a first circuit which outputs an audio to an analog audio output; and
a second circuit which outputs an audio to a digital audio output,
wherein a power of the first circuit is set to OFF when the first circuit is not used.
